# EUROPEAN PATENT APPLICATION

(11) **EP 0 874 481 A2**
(43) Date of publication of application: **28.10.1998**
(21) Application number: 98107517.9
(22) Date of filing: 24.04.1998
(51) Int. Cl.: H04B 10/207, H04B 10/24

(54) **Optical subscriber network system**

(30) Priority: 24.04.1997 JP 107389/97
(71) Applicant: NEC CORPORATION, Tokyo (JP)
(72) Inventor: Tamura, Takufumi, c/o NEC Corporation, Minato-ku, Tokyo (JP); Matsuo, Tadamasa, c/o NEC Engineering, Ltd., Minato-ku, Tokyo (JP)
(74) Representative: VOSSIUS & PARTNER

(57) **Abstract**

It is the object of the invention to provide an optical subscriber network system, which immediately interrupts an optical fiber by means of an optical circuit breaker, when an interfering light intrudes into an subscriber unit, and suppresses the effects of the interfering light on the other subscriber units in the same system. The plural optical circuit breakers are respectively inserted in series with the optical fibers between the subscriber units and the multiple optical coupler. When an interfering light intrudes into one of the subscriber units, the optical circuit breaker corresponding thereto discriminates the interfering light through the level or the low frequency component thereof, and interrupts the optical fiber concerned therewith.

## Description

The invention relates to an optical subscriber network system, and especially to an optical subscriber network system comprising plural optical fibers split by a multiple optical coupler.

A PDS (passive double star) system is typical of the aforementioned optical subscriber network system, and an optical fiber starting from a center station unit is split into plural optical fibers by a multiple optical coupler, each of which is communicated with a subscriber unit and propagates bidirectionally multiplexed optical signals between the center station unit and the subscriber unit, and in this way, an economical optical subscriber network system can be constructed.

Still more, WDM (wavelength division multiplexing) and FDM (frequency division multiplexing) systems can be exemplified as the ones for multiplexing the bidrectional optical signals. As systems for multiplexing up-stream optical signals starting form the subscriber units, which are transmitted simultaneously with downstream optical signals, the WDM system can be exemplified. A system, which simultaneously transmits the multiplexed down-stream and up-stream optical signals through a single optical fiber, can be realized by combining the multiplexing system for the down-stream optical signals with that for the up-stream optical signals, and WDM-TDMA, TCM (time compression multiplexing)-TDMA and FDM-TDMA-systems can be enumerated as such systems.

The aforementioned optical subscriber network system is provided with various kinds of monitoring functions for discriminating the existence of the extraordinariness in the system. According to the monitoring equipment in the system, the center station unit can discriminate whether a fault arises on the optical cable or in the subscriber units, and specify not only a faulty subscriber unit but also a faulty circuit therein. However, the monitoring equipment has no means for warning about and protecting against intrusion of an interfering light of high power into a subscriber unit, which may happens intensively or accidentally. In such a case, there arises the apprehension that an optical receiver in the center station unit is overloaded and the communications of the other subscriber circuits are interrupted. As mentioned in the above, the intrusion of the interfering light into one of the subscriber units may bring about a serious condition that all of the subscriber circuits are interrupted.

Accordingly, it is an object of the invention to provide an optical subscriber network system provided with optical circuit breakers for interrupting optical fibers upon detecting intrusions of interfering lights, each of which is inserted in series with an optical fiber between a subscriber unit and a multiple optical coupler.

According to an feature of the invention, an optical subscriber network system comprises:
a multiple optical coupler for splitting an optical fiber communicated with a center station unit into plural optical fibers, each of which is communicated with a subscriber unit and propagates bidirectional optical signals between the center station unit and the subscriber unit, and
plural optical circuit breakers, each of which is inserted in series with the optical fiber between the subscriber unit and the multiple optical coupler and immediately interrupts the optical fiber, when an interfering light intrudes into the subscriber unit.

The invention will be explained in more detail in conjunction with appended drawings, wherein:
FIG.1 is a block diagram for showing a structure of a conventional monitoring equipment of an optical subscriber network system,
FIG.2 is a block diagram for showing an optical subscriber network system according to the invention, and
FUG.3 is a block diagram of an optical circuit breaker used in the optical subscriber network system according to the invention.

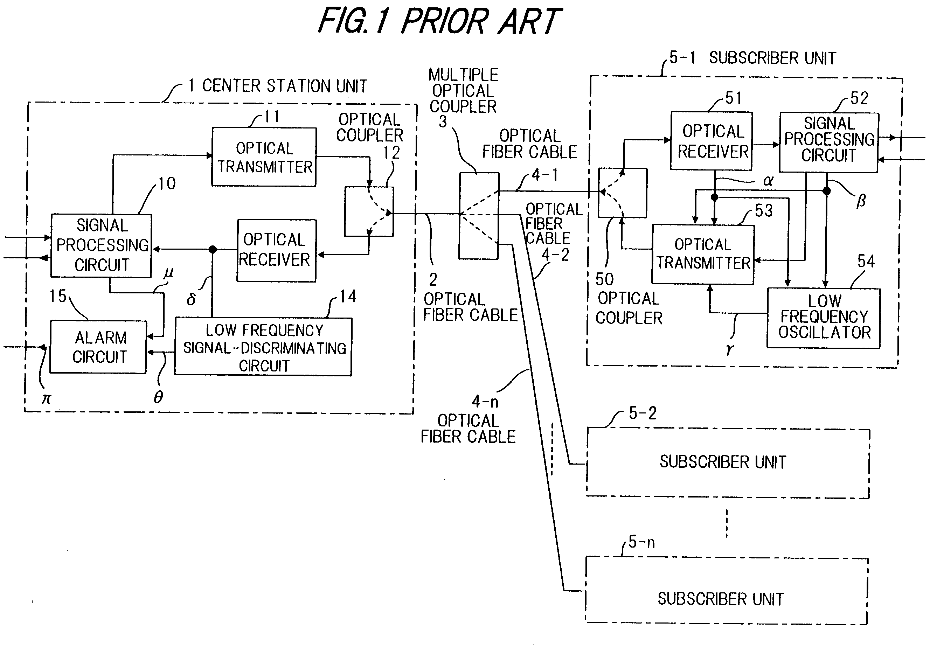

Before explaining an optical subscriber network system in the preferred embodiment according to the invention, the aforementioned conventional optical subscriber network system will be explained referring to FIG.1.

The aforementioned optical subscribed network system is provided with various kinds of monitoring functions in order to discriminate the extraordinariness in the system. For example, the monitoring equipment for the optical subscriber network system disclosed in Japanese Patent Kokai 7-87018 have the functions described as follows. FIG.1 shows the block diagram of the conventional monitoring equipment. This monitoring equipment for the optical subscriber network system discriminates whether a fault arises on the optical fiber cable or in a subscriber unit, and specifies a faulty circuit in the faulty subscriber unit.

A motoring equipment for an optical subscriber network system shown in FIG.1 is composed of a center station unit 1, an optical fiber cables, 2 and 4-1 to 4-n, an multiple optical coupler 3 and subscriber units 5-1 to 5-n.

The center station unit comprises a signal processing circuit 10, an optical transmitter 11, an optical coupler 12, an low frequency signal-discriminating circuit 14 and an alarm circuit 14. Thereupon, the optical transmitter 11 transmits down-stream optical signals to the respective subscriber units 5-1 to 5-n. The optical receivers 13 receives the up-stream optical signals and optical monitoring signals, both being transmitted from the respective subscriber units 5-1 to 5-n, and supplies them to the signal processing circuit 10. The signal processing circuit 10 examininates the existences and the kinds of the up-stream and monitoring signals supplied from the optical receiver 13 and specifies the locations of the faults within the scopes of the optical fibers, 2 and 4-1 to 4-n, and the subscriber units 5-1 to 5-n.

On the other hand, each of the subscriber unit 5-1 to 5-n comprises an optical receiver 51, which receives and processes the down-stream optical signal directed thereto, a signal processing circuit 52, an optical transmitter 53, which transmits an optical up-stream signal and an optical monitoring signal, and a low frequency signal generator 54.

Moreover, the multiple optical coupler 3 splits the down-stream optical signals and supplies them to the subscriber units 5-1 to 5-n, and multiplexes the up-stream optical signals, each being transmitted from the subscriber units.

The aforementioned monitoring equipment of a simple structure comprises monitoring signal-generating means and monitoring signal-discriminating means, in both of which low frequency analog voltages serves as monitoring signals. This equipment can discriminate whether the fault arises on the optical fiber cable or in any one of the subscriber units. Moreover, in the latter case, the monitoring equipment can specify not only a faulty subscriber unit but also a faulty circuit therein, that is to say, discriminate which of the optical signal receiver and the signal processing circuit is faulty.

However, the insufficiency of the aforementioned conventional optical subscriber network system has been described in the above.

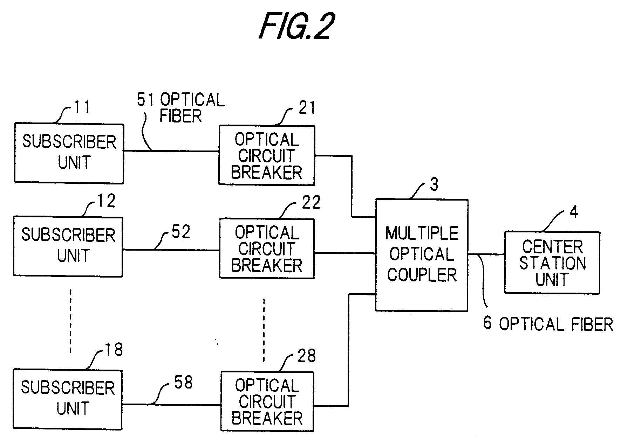

Next, a preferred embodiment of the invention will be explained referring to the appended drawings. FIG.2 is a block diagram for showing a preferred embodiment of the invention.

FIG.2 exemplifies eight subscriber units, which are connected with a center station unit comprising a switch board via eight optical fibers and an multiple optical coupler. As shown in FIG.2, the system is composed of eight subscriber units 11 to 18, each of which comprises an interface circuit communicated with subscriber terminals, such as telephone sets, and a signal processing circuit for multiplexing electrical signals supplied thereto and E/O-converting them, eight optical circuit breakers 21 to 28 for interrupting optical circuits upon detecting interfering lights, a multiple optical coupler 3 for converting eight branch optical fibers into a single optical fiber, a center station unit 4 for O/E-converting optical signals transmitted through subscriber circuits and demutiplexing and connecting them with a switch board, the eight optical fibers 51 to 58 composing branch optical transmission lines, and an optical fiber 6 communicated with the center station unit 4. Still more, the optical circuit breakers 21 to 28 and the multiple optical coupler 3 are allocated close to each other.

Next, the operation of the system will be explained. The subscriber units 11 to 18 are respectively communicated with the center station unit 4 via the eight subscriber circuits independent of each other, each of which transmits bidirectionally multiplexed optical signals. However, since the important circuits of the system, which play important roles in bidirectional transmission of the multiplexed optical signals are the same as those in the conventional system, detailed description thereon will be omitted, and explanation will be given only on matter concerned with the invention.

If an interfering light of high power intrudes into any one of the subscriber units 11 to 18 because of a fault in the subscriber unit concerned or with the intention of damaging the optical subscriber network system, the optical circuit breaker corresponding thereto, any one of 21 to 28, detects the interfering light and interrupts the subscriber circuit concerned. In the same instant, an optical signal modulated by a signal of a low frequency, which is sufficiently lower than that of a high bit rate electrical signal, (an optical alarm signal, hereinafter) is supplied to the multiple optical coupler 3 from the optical circuit breaker concerned. Since the intrusion of the interfering light is interrupted by the optical circuit breaker, the effects of the interfering light on the other subscriber units can be prevented, and the center station unit can specify the subscriber unit directly concerned with the intrusion of the interfering light by receiving the optical alarm signal and detecting its modulating frequency.

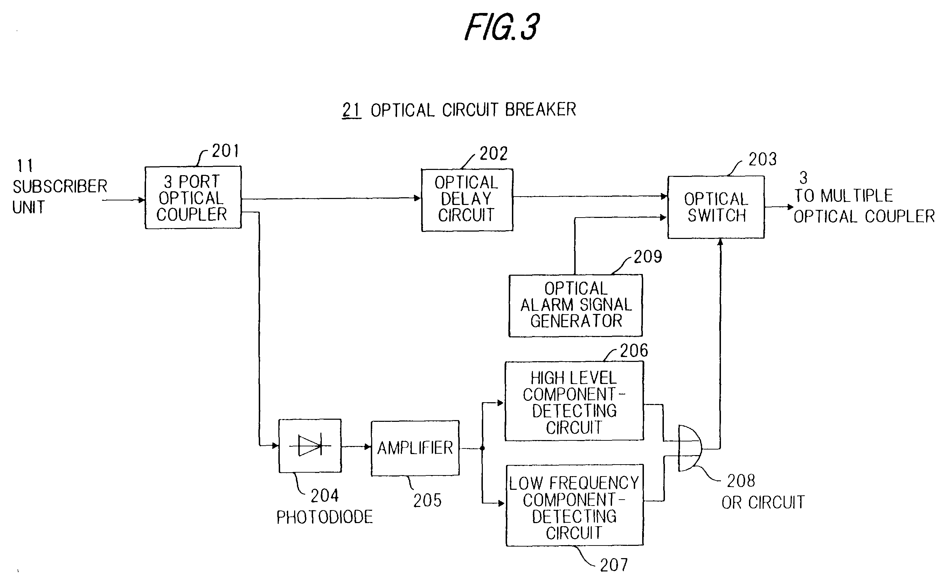

Next, the operations of the optical circuit breakers 21 to 28 will be explained referring to FIG.3. FIG.3 is a block diagram for showing the structure of the optical circuit breaker. For simplicity, the explanation will be given for a case, where the interfering light intrudes into the subscriber unit 11, in other words, the optical circuit breaker 21. The functions of structural element composing the optical circuit breaker 21 are explained as follows. An three port optical coupler 201 splits an optical signal supplied from the subscriber unit 11 into two optical signals. An optical delay circuit delays one of the two split optical signals by a time necessary for detecting the existence of the interfering light. A photodiode 204 converts the other one of the two split optical signals into an electrical signal. An amplifier 205 amplifies the output current of the photodiode 204 and converts it into a volage signal. A high level component-detecting circuit 206 is supplied with the output of the amplifier 205, and generates an output signal, when the output of the amplifier 205 exceeds a threshode level. A low frequency component-detecting circuit 207 is supplied with the output of the amplifier 205, and generates an output signal, when low frequency component including DC with a level exceeding a predetermined value, which is derived in consideration of the level of a high bit rate signal component involved in the output of the amplifier 205. An OR circuit 208 generates a logical sum of the output signals of the high level component-detecting circuit 206 and the low frequency component-detecting circuit 207. An optical alarm signal generator 209 generates an optical signal modulated by a low frequency signal, the frequency of which is sufficiently lower than that of the high bit rate electrical signal. An optical switch 203 is supplied with the output optical signals of the optical delay circuit 202 and the optical alarm signal generator 209, and transmits the output of the optical delay circuit 202, when the output of the OR circuit 208 is not supplied thereto; and transmits the output of the optical alarm signal generator 209, when the output of the OR circuit 208 is supplied thereto.

Next, the operation of the optical circuit breaker 21 will be explained. The optical signal supplied from the subscriber unit 11 is split into two optical signals by the three port optical coupler 201. One of the two split optical signals is deayed by the optical delay circuit 202 and supplied to the optical switch 203. The other one of the tow split optical signals is converted into an electrical signal by the photodiode 204 and supplied to the amplifier 205. Since the electrical signal generated by the photodiode 204 is slight, it is amplified by the amplifier 205 and converted into a voltage signal. The voltage signal is supplied to the high level component-detecting circuit 206 and the low frequency component-detecting circuit 207 in parallel. The extraordinariness of the optical signal, in other words, the existence of the interfering light, can discriminated through the detection of the high level component or the low frequency component of the output of the amplifier 205. The logical sum of the outputs of the high level component-detecting 206 and the low frequency component-detecting circuit 207 can be given by the OR circuit 208, and supplied to the optical switch 203.

In a normal case, the output of the optical delay circuit 202 is supplied to the optical switch 203 and passes therethrogh. However, when the interfering light is detected and the output of the OR circuit 208 is supplied to the optical switch 203, the output of the optical switch 203 is change into the optical alarm signal. Since a few time is necessary for detecting the interfering light, the optical delay circuit 202 delays the optical signal by the aforementioned time, hence a momentary leakage of the interfering light into the output of the optical switch 203 can be prevented.

Since the modulating frequency of the optical alarm signal is peculiar to the corresponding optical circuit breaker, the center station unit 4 can immediately specifies the subscriber unit, into which the interfering light intrudes.

As mentioned in the above, since the optical subscriber network system according to the invention detects the intrusion of the interfering light by the optical circuit breaker and interrupts the subscriber circuit concerned, the effects of the interfering light on the other subscriber units can be perfectly prevented.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. An optical subscriber network system comprising:
a multiple optical coupler for splitting an optical fiber communicated with a center station unit into plural optical fibers, each of which is communicated with a subscriber unit and propagates bidirectional optical signals between said center station unit and said subscriber unit, and
plural optical circuit breakers, each of which is inserted in series with said optical fiber between said subscriber unit and said multiple optical coupler and immediately interrupts said optical fiber, when an interfering light intrudes into said subscriber unit.

2. An optical subscriber network system according to claim 1, wherein:
said optical circuit breaker comprises:
a three port optical coupler for splitting an optical signal supplied from said subscriber unit into two optical signals,
a photodiode for converting one of said two optical signals into an electrical signal,
an interfering light-detecting circuit, which immediately generates an interfering light-detecting signal, when it detects existence of said interfering light from said electrical signal,
an optical alarm signal generator for generating an optical signal modulated by a low frequency signal,
an optical switch, which is supplied with another one of said two optical signals and said optical alarm signal, passes said another one of said two optical signals, when said interfering light-detecting signal is not generated; and passes said optical alarm signal, when said interfering light-detecting signal is generated, and
an optical delay circuit inserted between said three port optical coupler and said optical switch, which delays said another one of said two optical signals by a time necessary for detecting existence of said interfering light.

3. An optical subscriber network system according to claim 2, wherein:
said interfering light-detecting circuit detects existence of said interfering light based on detection of a high level component or a low frequency component involved in said electrical signal derived from said photodiode.

4. An optical subscriber network system according to claim 2 or 3, wherein
said low frequency signals for modulating said respective optical alarm signals are different from each other.

5. An optical subscriber network system according to claim 4, wherein:
said center station unit comprises means for specifying said subscriber unit, into which said interfering light intrudes, based on detection of said low frequency for modulating said optical alarm signal.
